# EUROPEAN PATENT SPECIFICATION

(11) **EP 2 433 087 B1**
(45) Date of publication and mention of the grant of the patent: **21.01.2015**
(21) Application number: 10725926.9
(22) Date of filing: 18.05.2010
(51) Int. Cl.: G01B 9/04, G02B 21/00, G02B 21/24, G02B 21/16

(54) **DEVICES AND METHODS FOR DYNAMIC DETERMINATION OF SAMPLE SPATIAL ORIENTATION AND DYNAMIC REPOSITIONING**
VORRICHTUNGEN UND VERFAHREN FÜR DIE DYNAMISCHE BESTIMMUNG DER RÄUMLICHEN AUSRICHTUNG UND DYNAMISCHEN REPOSITIONIERING EINER PROBE
DISPOSITIFS ET PROCÉDÉS POUR LA DÉTERMINATION DYNAMIQUE DE L'ORIENTATION SPATIALE ET DU REPOSITIONNEMENT DYNAMIQUE D'UN ÉCHANTILLON

(30) Priority: 19.05.2009 US 179498 P
(43) Date of publication of application: 28.03.2012
(73) Proprietor: BioNano Genomics, Inc., San Diego, CA 92121 (US)
(72) Inventor: SHARONOV, Alexey, Y., Drexel Hill, PA 19026 (US)
(74) Representative: Carpmaels & Ransford LLP
(86) International application number: PCT/US2010/035253
(87) International publication number: WO 2010/135323

(56) References cited:
- WO-A1-2005/093483
- US-A- 5 784 164
- US-B1- 6 172 349

## Description

### TECHNICAL FIELD

The present invention relates to the fields of optical analysis and to autofocus systems.

### BACKGROUND

Automated imaging systems, such as wide field fluorescence microscopes, are commonly used for sensitive detection in different fields. These systems typically use high numeric aperture values and high-magnification optics to achieve the user's desired resolution and level of detection.

Existing autofocus systems typically include devices that perform primary focusing and maintain focus distance for a variety of operations, including loading and sample scanning. The focus distance is typically maintained to an accuracy of about 0.1 - 0.2 micrometers. This level of precision necessitates direct measurement of the distance between system optics and the sample plane.

WO 2005/093483 describes a method capable of measuring the focal position and height of an organism sample.

Traditional position-sensitive detectors utilize differential signals from two-segment or quadrant photodiodes as feedback, and then compare the relative intensities of these signals to adjust the focus. These differential signals, however, provide little utility in the determination of distance between objective lens and the sample, and can also experience difficulty in maintaining autofocus on certain samples that have certain visual profiles (e.g., profiles that lack sharp contrasts between regions).

Accordingly, there is a need in the art for systems and methods capable of maintaining a subject in focus without suffering the shortcomings of existing autofocus methods are based on comparing the strength of differential signals. The value of such systems and methods would be further enhanced if such systems and methods were capable of maintaining such focus over extended periods of time.

### SUMMARY

In meeting the described challenges, the claimed invention first provides methods of maintaining automated optical focus on a target sample, comprising specifying a spatial relationship between an optical plane within a magnifier and a target sample; illuminating at least a portion of the target sample with at least one beam of radiation inclined at an incidence angle of at least about 5 degrees; collecting, on a radiation detector, at least a portion of any radiation reflected from the target sample wherein the illuminating and collecting steps are performed through the optical plane of the magnifier; correlating the location of the reflected radiation collected on the radiation detector with the spatial orientation of the target sample relative to the optical plane of the magnifier; and varying the spatial orientation, or both of the optical plane of the magnifier, the sample, or both, so as to maintain the programmed spatial relationship between the optical plane of the magnifier and the target sample.

The present invention also includes autofocus devices, suitably comprising a magnifier, a sample stage, at least one of the magnifier and the sample stage being capable of tilting, rotating, rising, lowering, or any combination thereof; a radiation source capable of illuminating a sample disposed on the sample stage through the optical plane of the magnifier with a beam of radiation at an incidence angle of at least about 5 degrees; a radiation detector in optical communication with the sample disposed on the stage, the radiation detector being capable of collecting at least a portion of any radiation reflected from the sample disposed on the sample stage through the optical plane of the magnifier; and a device capable of correlating the location on the radiation detector of any radiation reflected from the sample disposed on the sample stage with the spatial orientation of the sample relative to the magnifier.

### BRIEF DESCRIPTION OF THE DRAWINGS

The summary, as well as the following detailed description, is further understood when read in conjunction with the appended drawings. For the purpose of illustrating the invention, there are shown in the drawings exemplary embodiments of the invention. The invention is not, however, limited to the specific methods, compositions, and devices disclosed. In addition, the drawings are not necessarily drawn to scale. In the drawings:
**FIG.1** illustrates an exemplary autofocus unit according to the claimed invention;
**FIG. 2** illustrates the long-term stability of the inventive systems, demonstrating that with the system turned on, the distance between the objective and the sample was well-maintained;
**FIG. 3** illustrates the response of a system made according to the claimed invention to an applied force, wherein positions indicated by arrows shows the dynamic response of the inventive system when a 100 g load was placed on and removed from the target object positioning stage - when the "auto focus" was switched on (*i.e.,* made active), the system automatically compensated for focus shift due to placement of load by adjusting the position of the objective and/or high precision stage in the z-direction so as to maintain a pre-set distance between the objective and the sample;
**FIG. 4** depicts a block diagram of microscope optical path including an auto focus system according to the claimed invention;
**FIG. 5** illustrates an optically-based scheme of distance measurements, in which a laser beam propagates off-axis of a microscope's objective and reflects from the sample surface, with the changing distance between objective and sample plane causing deflection of the laser beam, and the projected spot position being tracked by a radiation detector (*e.g*., a CCD, CMOS, or photodiode device) and then being directly translated to distance by means of a predetermined dependence;
**FIG. 6** illustrates one method of sensor calibration, in which the shift of the microscope's objective and the sample surface's positions relative to one another causes displacement of the reflected spot on the sensor area, with the change in the spot's position being linearly proportional to the distance between objective and sample, and the spot's position being used in the autofocus feedback control loop;

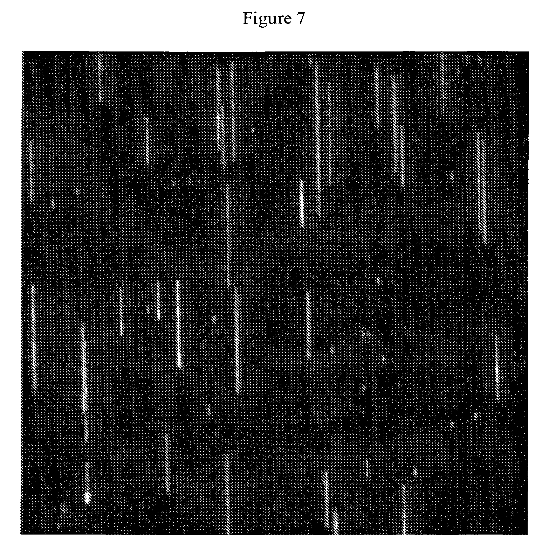

**FIG. 7** illustrates an example of a focused image prepared according to the claimed invention, in which image fluorescently labeled DNA fragments reside in silicon etched nanochannels, the autofocus system maintaining the image's focus for the duration of the experiment (appx. 30 min);
**FIG. 8** depicts a process flow diagram for the claimed invention, showing the steps of calibrating the sample stage, reading the position on a radiation detector of a beam reflected from the sample, and adjusting the spatial orientation of the stage, the objective, or both, in response to the position on the array detector of the one or more laser beams reflected from the sample; and
**FIG. 9** depicts an exemplary embodiment of the claimed invention utilizing a two-spot tracking process.

### DETAILED DESCRIPTION OF ILLUSTRATIVE EMBODIMENTS

The present invention may be understood more readily by reference to the following detailed description taken in connection with the accompanying figures and examples, which form a part of this disclosure. It is to be understood that this invention is not limited to the specific devices, methods, applications, conditions or parameters described and/or shown herein, and that the terminology used herein is for the purpose of describing particular embodiments by way of example only and is not intended to be limiting of the claimed invention.

As used in the specification including the appended claims, the singular forms "a," "an," and "the" include the plural, and reference to a particular numerical value includes at least that particular value, unless the context clearly dictates otherwise. The term "plurality", as used herein, means more than one. When a range of values is expressed, another embodiment includes from the one particular value and/or to the other particular value. Similarly, when values are expressed as approximations, by use of the antecedent "about," it will be understood that the particular value forms another embodiment. All ranges are inclusive and combinable.

It is to be appreciated that certain features of the invention which are, for clarity, described herein in the context of separate embodiments, may also be provided in combination in a single embodiment. Conversely, various features of the invention that are, for brevity, described in the context of a single embodiment, may also be provided separately or in any subcombination. Further, reference to values stated in ranges include each and every value within that range.

As used herein, the term "spatial orientation" refers to the physical position of an object as well as that object's angle, tilt, or other characteristics. For example, the spatial orientation of a target relative to a lens relates to the distance between the target and the plane, as well as inclination of the object relative to the lens.

As used herein, the term "radiation detector" refers to a device capable of detecting electromagnetic radiation. Such devices are suitably capable of detecting laser radiation, photons, microwaves, visible light, or any combination thereof. Charge-coupled devices (CCDs), complementary metal oxide semiconductor (CMOS), photodiodes, photon counters, photomultiplier tubes, and the like are all considered suitable radiation detectors.

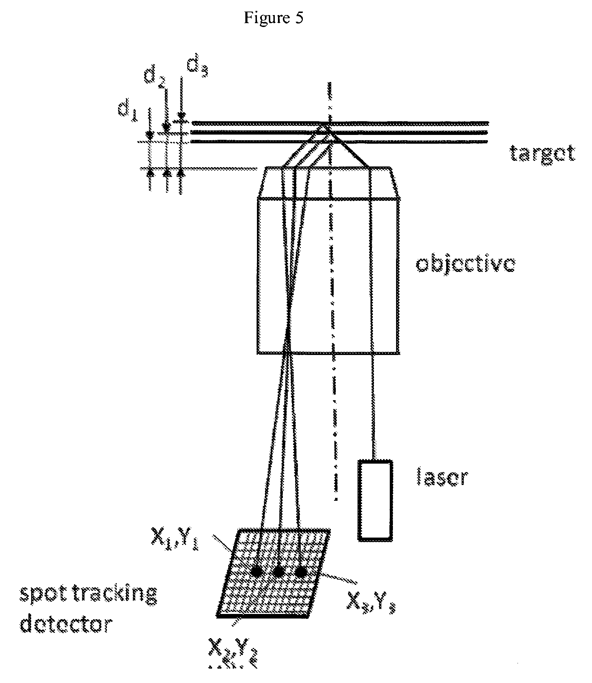

In some embodiments, the radiation detector is capable of detecting the locations of two or more individual spots (beams) of radiation, and the detector may be capable of detecting the locations where three or even four individual spots (beams) of radiation may strike the detector. The radiation detector suitably is capable of determining the X-Y position (*e.g.,* **FIG. 5**) of radiation that strikes the detector. In some embodiments, the detector is capable of resolving the intensity of one or more spots (*i.e*., reflected radiation beams) that strike the detector.

In one embodiment, the invention provides methods of determining the spatial orientation of a target sample. These methods suitably include illuminating at least a portion of the target sample with at least one radiation beam inclined at an incidence angle of at least about 5 degrees. A non-zero incidence angle is normally used. Incidence angles of 10, 20, 30, 40, 50, 60, or even greater numbers of degrees are also suitable. The optimal incidence angle will depend on the needs of the user and the characteristics of the target being analyzed.

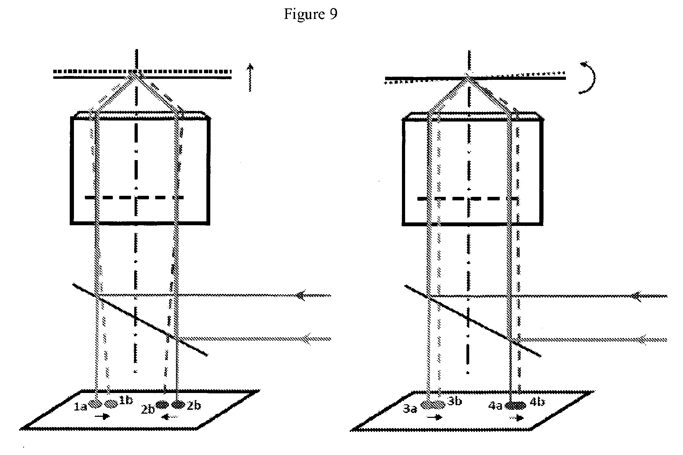

The methods also include collecting, on a radiation detector, at least a portion of any radiation reflected from the sample and correlating the location of the reflected radiation collected on the radiation detector with the spatial orientation of the target sample. The collection may be accomplished by, *e.g.,* a CCD, CMOS, photodiode, or other radiation detector device. The detector suitably has a two-dimensional array of radiation detection elements, although the detectors may have a one-dimensional set of detector elements. One exemplary system is depicted in **FIG. 9**, which figure is described in additional detail further herein.

The beam of radiation is suitably a collimated beam. Laser beams are considered an especially suitable form of radiation, although microwave radiation and visible light may also be used in the claimed invention. The wavelength of the radiation may vary; as described elsewhere herein, the wavelength may be chosen such that the beam does not substantially interfere with visual inspection of the sample.

Correlating the location of the reflected radiation collected on the radiation detector with the position of the target sample may be accomplished in several ways. In one embodiment, the correlating comprises comparing (a) the location of the reflected radiation collected on the detector with (b) the location on the radiation detector that radiation reflected from the target sample is known to illuminate when the target sample is in a known (or preset) spatial orientation.

This correlation is suitably accomplished, for example, by taking a target sample and irradiating the sample in a variety of orientations or positions and collecting (on the radiation detector) the radiation reflected by the sample for each orientation. In this way, the user may create a library (which may also be considered "map") of locations on the radiation detector that correspond to the locations struck by radiation reflected from a target sample in various spatial orientations. The user may also collect data for only a subset of all possible orientations and positions and, based on this subset data, use a predictive algorithm to complete the library data set.

As one non-limiting example, one may find that lasing a flat sample placed 25 mm from a microscope objective results in the reflected laser radiation striking a radiation detector at the detector's center. The user might then also find that lasing the same sample placed 15 mm from the microscope objective results in the reflected laser radiation striking the detector in the upper left-hand quadrant of the detector. Accordingly, if the user then places the sample on the target stage, irradiates the sample, and finds that the reflected laser radiation strikes the photo detector in the center of the detector, it will be known to the user that the sample is about 25 mm from the microscope objective.

Alternatively, if the user lases a sample and finds that the reflected radiation strikes the detector in the upper left-hand quadrant of the detector, it will be known that the sample is about 15 mm from the microscope objective. The user may - manually or by way of a controller - then change the orientation of the sample, the microscope objective, or both, so as to maintain the sample in proper focus. In the above examples, if the optimal focal distance from sample to objective is 13.5 mm, the user (or the system controller) can then adjust the sample position such that the sample is positioned 13.5 mm from the objective.

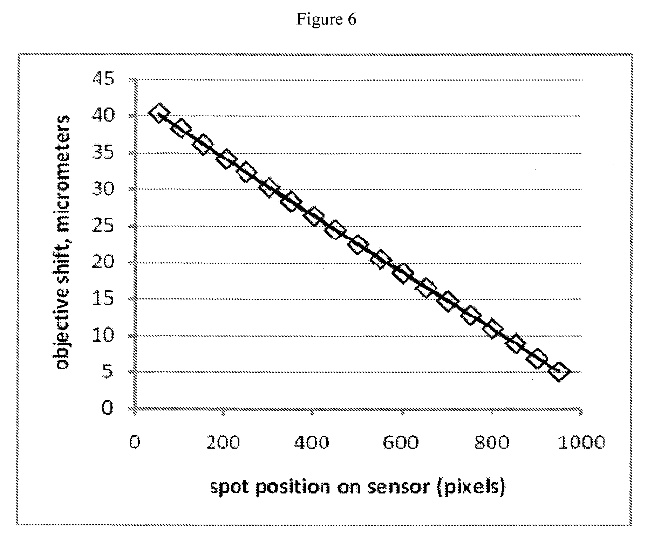

**FIG. 6** illustrates one exemplary process according to the claimed invention. That figure depicts the correlation between the location on the laser sensor where the reflected radiation strikes (shown on the x-axis of the figure) and the shift of the microscope's objective lens (shown on the y-axis of the figure). As shown by non-limiting **FIG. 6**, the spot's position on the detector is a linear function of the distance between a plane within the objective lens and the sample.

It will be apparent that using the claimed methods, a user may develop a library (or map) of spot locations on the radiation detector that correspond to the radiation reflected from a target sample in one or more spatial orientations. The user may thus construct such a library or map by irradiating a sample in each of a wide range of spatial orientations (*e.g*., distance from microscope objective, tilt of sample relative to microscope objective, and so on). During active experimentation, the user may then compare the location of radiation reflected from a target that then strikes the radiation detector with the data in the library or map so as to estimate the target's spatial orientation. The user may then take the additional step of adjusting the target's spatial orientation so as to return the target's orientation

FIG. 5 depicts a nonlimiting embodiment of the claimed invention. In that figure, a beam reflects off of a sample (located at the top of the figure) as the sample is moved through positions d₁, d₂, and d₃, each of which positions is at a different distance from the system's objective.

At each of these three positions, the beam reflects off of the sample and impacts (respectively) the detector at locations (X₁, Y₁), (X₂, Y₂), and (X₃, Y₃). By tabulating these three detector locations and correlating them to the corresponding sample positions (d₁, d₂, and d₃), the user can construct a library or table of the data, namely a map that correlates the sample position with the location(s) on the detector where radiation beams are reflected at each position. By using this library, the user can then determine, based on where a beam reflects off of a subsequent sample, the position of the sample and can adjust the focus accordingly.

Operation of the embodiment in **FIG. 5** may be as follows. Sample position d₁ (and detector reflection points X₁ and Y₁) corresponds to a position 10 mm above the objective lens. A later-analyzed sample that reflects the incident beam to location X₁ and Y₁ will then be known to be 10 mm above the objective lens. Although **FIG. 5** shows a single beam, as is described elsewhere herein, the system may use multiple beams.

In some embodiments, the beam of radiation has a wavelength that does not interfere with visual inspection of the targeted sample. This configuration is particularly useful, as it enables determination of the spatial orientation of the target while simultaneously observing the target.

The invention also includes illuminating at least a portion of the sample with multiple radiation beams, as illustrated in **FIG. 9****.** This can even include illuminating the sample with two, three, or even four beams of collimated radiation, which in turn yields additional information to the user regarding the spatial orientation of the target. The radiation may be delivered via a waveguide, via fiber optics, or by other similar means. As one non-limiting example (described in more detail further herein), irradiating a target with multiple beams provides the user with information regarding the displacement, tilt, or other information regarding the sample's spatial orientation.

The methods may also include the construction of a data set (or map) that relates the location on the radiation detector that radiation reflected from the target sample illuminated with at least one beam of radiation inclined at an incidence angle of at least about 5 degrees is known to illuminate when the target sample is in a particular spatial orientation. The data may do this for two or more spatial orientations of the sample. The user may then compare the location of reflected radiation collected on the radiation detector with the data set so as to estimate the spatial orientation of a sample.

As one non-limiting example, the user may determine that lasing a sample that is 25 mm from a microscope objective and is tilted 45° from the perpendicular line from that objective results in reflected radiation striking a radiation detector in the lower-right hand quadrant of that detector. The user may also determine that that laser-irradiating a sample that is 35 mm from a microscope objective and is turned 55° from the perpendicular line from that objective results in reflected radiation striking the detector in the upper-right hand quadrant of that detector. Based on this information, a later-analyzed sample that reflects incident radiation to strike the detector in the upper-right hand quadrant is likely 35 mm from the microscope objective and is turned at 55° from the perpendicular line to that objective. The user may then utilize this information to adjust the position or orientation of the objective, the sample, or both, so as to maintain the sample in proper focus.

While several embodiments herein describe moving the sample in response to signals received by the detector, it should be understood that the objective lens or other imaging equipment of the inventive systems may also be moved in response to information gathered by the detector.

In some embodiments, the methods may include specifying a spatial relationship between a plane within an optical analysis device and the target sample. This is done, for example, to specify the optimal distance between a sample and a microscope objective for maintaining that sample in focus. In other embodiments, the relationship between the optical analysis device and the sample is chosen for other reasons, such as maintaining a minimum clearance between the sample and the analysis device.

The methods also include varying the spatial orientation of the sample in response to the location of the reflected radiation collected on the radiation detector so as to maintain the programmed spatial relationship between the plane within the optical analysis device and the target sample. In such a way, the user may maintain optimal focus on a sample.

As a non-limiting example, a user may determine that the optimal distance (for imaging purposes) between a sample and a microscope objective is 25 mm. The user then sets this distance as a set-point into a controller that controls the spatial orientation of the sample, the microscope objective, or both. As analysis of the sample proceeds, laser light or other collimated radiation is reflected off of the sample, with the reflected radiation striking a radiation detector. The controller then compares the location on the radiation detector where the radiation strikes against a data set location on the radiation detector that radiation reflected from target samples of various, known spatial orientations is known to strike. Based on this comparison, the controller can then effectively (1) determine the spatial orientation of the sample being analyzed; and (2) vary the spatial orientation of the sample target, the microscope objective, or both, so as to maintain the 25 mm separation distance needed to maintain the sample in optimal focus.

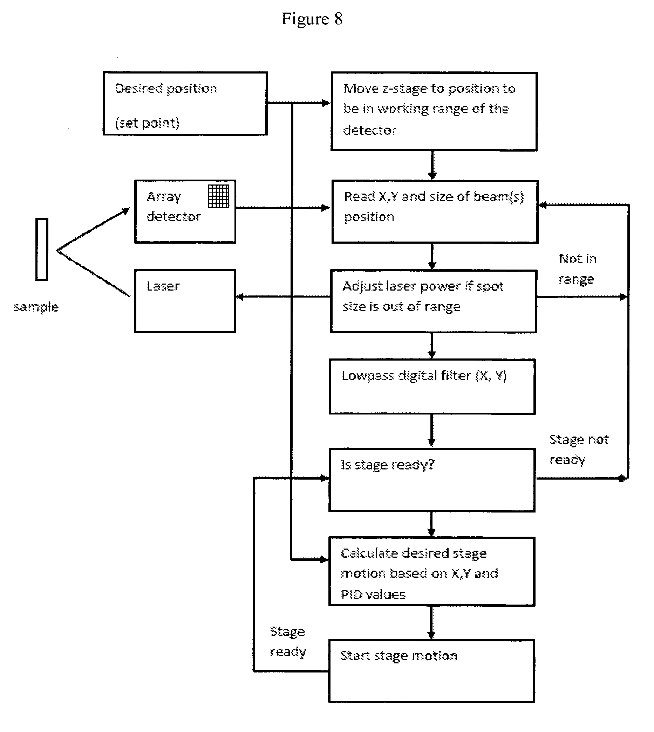

This process is depicted in **FIG. 8**, which figure depicts the step-wise process of the claimed methods. As shown in that figure, the user may adjust the stage position (in the z-axis) so that the stage is within the working range of the detector. The user may then irradiate the sample (e.g., with a laser) with one or more beams, and then read the x-y position of the reflected beam spots on the detector. If the beam spot size is out of range, the user may adjust (manually or automatically) beam power so that the spot size are within the working range.

The user may then ready the stage for motion. The stage motion may then be effected by a controller, such as a PI or PID controller, that modulates the stage's movement and orientation. The detector then reads the position of the reflected beams, and then the process begins anew such that the stage reaches the desired position so as to maintain the sample in focus. The process may be "run" in real time so as to adjust the sample position (on the stage) to maintain the sample in focus.

Varying the spatial orientation of the target sample - or microscope objective - can include elevating, lowering, tilting, rotating, and the like. In this way, the system acts to adjust the position of the sample (or analysis device) in real-time, during observation and analysis. The methods have the additional advantage of relying principally on the location within the radiation detector where the radiation reflected from the sample strikes. In this way, the methods are based on the location of the radiation strike, not necessarily on the intensity of that radiation.

The invention also includes instruments. The disclosed instruments suitably include a sample stage; a radiation source capable of illuminating, with a beam of radiation at an incidence angle of at least about 5 degrees, a target disposed on the sample stage; a radiation detector in optical communication with a target disposed on the stage, the radiation detector being capable of collecting at least a portion of any radiation reflected from a target disposed on the sample stage; and a device capable of correlating the location on the radiation detector of any radiation reflected from the target disposed on the sample stage with the spatial orientation of the target.

Suitable sample stages will be known to those in the art, and can include commercially-available stages capable of adjustable spatial orientation. In some embodiments, the stage is motorized and can translate in the Z-axis direction. In other embodiments, the stage is capable of controlled motion in the X, Y, or Z-directions. Stages may also be capable of being controllably tilted.

Suitable detectors include, for example, CMOS, CCD, photodiodes, PMTs, and the like.

The radiation sources of the claimed devices include lasers, visible light, IR, and UV radiation. Other sources of radiation are also useful, although collimated laser beams are especially preferable.

The claimed instruments also suitably include an optical analysis device capable of optical communication with a target disposed on the sample stage, with the radiation source, or both. Such devices include, e.g., microscopes, CCDs, and the like.

Controllers capable of governing the spatial orientation of the optical analysis device, the sample stage, or both, are also suitably included in the claimed instruments. As described elsewhere herein, the controller suitably governs the spatial orientation of the sample stage, the spatial orientation of the optical analysis device, or both. The controller suitably correlates the location on the radiation detector that is struck by radiation reflected from an radiation-illuminated sample with a data set of locations on the radiation detector corresponding to locations on the radiation detector that are struck by radiation reflected from radiation-illuminated samples in one or more known spatial orientations.

The present invention also provides methods of maintaining automated optical focus on a target sample. These methods include specifying (e.g., by programming) a spatial relationship between an optical plane within a magnifier and a target sample; illuminating at least a portion of the target sample with at least one beam of radiation inclined at an incidence angle of at least about 5 degrees; collecting, on a radiation detector, at least a portion of any radiation reflected from the target sample; correlating the location of the reflected radiation collected on the radiation detector with the spatial orientation of the target sample relative to the optical plane of the magnifier; and varying the spatial orientation, or both of the optical plane of the magnifier, the sample, or both, so as to maintain the programmed spatial relationship between the optical plane of the magnifier and the target sample. The claimed inventions are, in some embodiments, capable of supporting a focus range of about 200 nm. The claimed invention can suitably maintain a focus distance in the micrometer range.

As described elsewhere herein, the illuminating suitable include exposing the target sample to a laser or other radiation. The laser radiation is suitably of a frequency that does not interfere with optical analysis or inspection of the sample, and is suitably of a power that does not damage the sample, but is also powerful enough that radiation reflecting from the sample is nonetheless of a magnitude that is detectable by a radiation detector. In some embodiments, the laser power is in the tens- or hundreds-µW range. The optimal laser power for a particular application will be easily determined by one of skill in the art and will depend on the radiation (photon) sensor being used, the characteristics of the sample, and other conditions.

In some embodiments, such as that shown in, *e.g.,* **FIG. 5**, the illuminating and collecting may be performed through the optical plane of the magnifier. The laser radiation is suitably off-axis relative to the magnifier, although the laser radiation may, in some embodiments, be on-axis relative to the magnifier.

The methods also include correlating the location of the reflected radiation collected on the radiation detector with the position of the sample relative to the magnifier by comparing (a) the location of the reflected radiation collected on the radiation detector with (b) the location on the radiation detector that radiation reflected from a sample is known to illuminate when the sample is in a particular spatial orientation relative to the magnifier. This procedure is described in additional detail elsewhere herein, e.g., in **FIG. 5** and **FIG. 6****.**

In some embodiments, the methods include construction of a data set (or "location map") that includes the location on the radiation detector that radiation reflected from a target sample illuminated with at least one beam of radiation inclined at an incidence angle of at least about 5 degrees is known to illuminate when the target sample is in a particular spatial orientation relative to the optical plane of the magnifier, for two or more spatial orientations of the target sample.

This enables the user to build up a complete map or listing of radiation detector locations that correspond to a broad range of spatial orientations (i.e., positions and tilt/attitudes) for a sample, thus providing the user with the maximum available information with which to adjust, where desired, the position of the sample, the analysis device, or both, by elevating, lowering, tilting, rotating, and the like.

The correlating may include comparing the location of the reflected radiation collected on the radiation detector with the library. The disclosed autofocusing methods include, in some embodiments, illuminating at least a portion of the target sample with two or more beams of collimated radiation; as previously described, irradiation of a sample with multiple beams provides the user with additional information regarding the tilt or other orientation characteristics of a sample.

The present invention also includes autofocus devices. These devices suitably include a magnifier; a sample stage, at least one of the magnifier and the sample stage being capable of tilting, rotating, rising, lowering, or any combination thereof; a radiation source capable of illuminating a sample disposed on the sample stage with a beam of radiation at an incidence angle of at least about 5 degrees; a radiation detector in optical communication with the sample disposed on the stage, the radiation detector being capable of collecting at least a portion of any radiation reflected from the sample disposed on the sample stage; and a device capable of correlating the location on the radiation detector of any radiation reflected from the sample disposed on the sample stage with the spatial orientation of the sample relative to the magnifier.

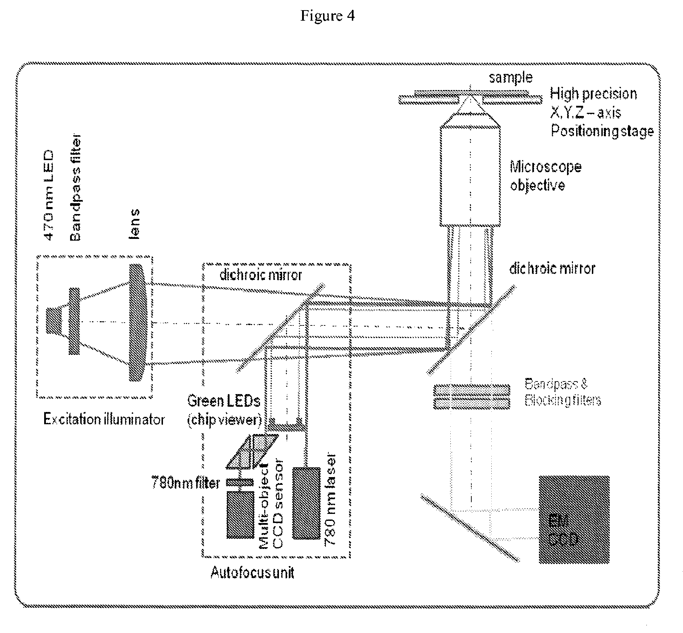

A block diagram of a representative device is shown in **FIG. 4****.** A process flow diagram for a representative device is shown in **FIG. 5****.**

In some embodiments, radiation detector comprises a charge-coupled device, or other photo-detecting device. Suitable magnifiers include, e.g., microscopes and the like. Radiation sources are suitably lasers.

The devices also suitably include, as described elsewhere herein, a controller that governs the spatial orientation of the magnifier, a controller that governs the spatial orientation of the sample stage, or both. In some embodiments, a controller modulates the spatial orientation of both the stage and the magnifier.

The controller can, in some embodiments, include embedded firmware. This firmware is suitably adapted to provide error free closed loop feedback control. This control suitably has the ability to read an essentially error-free position from the radiation detector (sensor) at an approximately 200 Hz update rate, which may include (a) automated search of reflected laser spot, (b) robust algorithms to eliminate possible misreading, (c) an adaptive lowpass digital filter, (d) feedback control of laser power to compensate for differences (*e.g*., up to 300%) in reflection, and (e) recovery from an unpredictable state.

A PID controller may be used. Such controller is suitably adaptive to the period of successful reading whereby (a) the PID coefficients are automatically adjusted in response of changing of sample intervals and error values, and (b) focus positioning is adjusted with an developed algorithm for Z-axis movement utilizing substep control.

Algorithms may be used to provide for continuous monitoring of upper and lower motion limits so as to prevent physical damage of the objective lens or other instrumentation. This may also be accomplished by a physical stop that prevents undesirable motion of the stage or optics of the system.

The systems may be configured so as to turn off the radiation source (*e.g.,* laser) when the system is not within focusing range. Process parameters may be in a device's nonvolatile memory and recalled after startup. In some embodiments, the devices include a splitter capable of dividing the beam of radiation into multiple beams of radiation. Division is suitably accomplished by mirrors, filters, prisms, and the like.

Some of the advantages of the disclosed invention include, *inter alia,* (1) the ability to focus and maintain the focus position at object surface within sub-micrometer accuracy at high magnification factor, (2) accommodation of targets that have significantly different surface reflection properties, (3) the ability to work autonomously in real time, (4) the ability to dynamically control a high precision motorized positioning stage (e.g., a stage capable of movement in the Z-direction) to automatically focus target object during XY stage motion, (5) the ability to use a different wavelength for auto focusing so as to avoid interfering with the optical path of the magnifier (*e.g*., a fluorescent microscope), (6) a large working range to adequately accommodate mechanical tolerances and the uncertainty of the target object's field of view positioning. Existing technologies fail to address these aspects of the claimed invention.

The claimed invention is particularly suitable in the analysis of moving subjects (e.g., macromolecules) that proceed within one or more structures disposed on a substrate. The claimed invention is also suitable for analysis of dynamic or evolving subjects (*e.g*., biological samples) that may move or be moved from one location to another during analysis.

While the claimed invention is suitable for analysis of dynamic subjects, the invention is also useful in dynamic environments, where environmental conditions may pose a challenge to maintaining sample focus. For example, in an environment where vibration is an issue (e.g, a laboratory located in an urban environment), the invention may be used to maintain the sample in focus by adjusting in real-time the position of the sample, objective lens, or both, in response to environmental vibrations.

In one embodiment of the present system, a infrared laser diode beam propagates off-axis relative to a microscope's objective (*e.g*., **FIG. 5**) and is directed to the sample surface at a high incidence angle. The reflected beam the passes back through the same objective and is detected by a position sensitive detector, such as a charge-coupled device (CCD). The position of the reflected spot on the detector surface is proportional to the distance between the microscope's objective lens (or some other image collector) and the sample's surface of reflection. The reading from the detector is then suitably used by a microcontroller to provide feedback to the objective's z-stage, which stage is in turn moved so as to maintain a focus distance, suitably at a high precision and accuracy, as shown in **FIG. 8****.**

As one example, the user may place the sample into focus and then record the position or positions where beams reflected from the in-focus sample impact the detector. The user may then process the sample (e.g., adding a reagent to a cellular sample, heating a cellular sample, and the like) and then use a controller connected to a motorized sample stage (or optical objective) to move or reorient the sample (or objective) during processing such that beams reflected from the sample continue to impact the detector at the location or locations that correspond to the in-focus position for the sample. As explained elsewhere herein, the system can compensate for ambient vibrations (*e.g*., vibrations caused by passing traffic) to maintain a sample in focus during sample processing or analysis.

In some embodiments, the microcontroller effects two- or three-dimensional movement by the objective. This may include rising, lowering, rotating, tilting, or movement in the X-Y plane.

Unlike traditional approaches, the present invention does not utilize detection of variations in the spot intensity on photodiode segments. Instead, the present invention utilizes multiobject tracking technology by means of a two dimensional sensor (*e.g*., a CCD device) that measures the actual XY position of one or more spots across the sensor's surface. In some embodiments, the detector tracks and provides absolute positioning and size information for two, three, or four reflection spots simultaneously; **FIG. 9** depicts this process for two beams.

This approach has a number of advantages over existing alternatives. First, the claimed invention includes multi-spot tracking that is essentially insensitive to local variations in reflection and scattering that are caused by impurities and object structure. Second, the focusing information used in the invention is directly related to the sample's distance from the objective to the sample's reflecting surface. Further, the claimed invention affords a comparatively wide linear detection range, which range can be about 50 µm, at < 10 nm accuracy.

The invention also provides increased accuracy in positioning of the stage or magnifier when multi-spot tracking mode is used, as such positioning is modulated in accordance based on data from multiple spots (i.e., reflected radiation), which in turn improves the positioning accuracy. The invention also allows users to use comparatively low laser power (e.g., < 200 µW when reflected from the glass/air interface) to match the optical sensor's requirements. This enables the user to consume less power when performing analysis and also reduces any changes caused in a sample by incident radiation.

The invention also enables the use of a single detector for multiple-spot tracking, which in turn simplifies the user's equipment requirements. Further, the positions and trajectories of the reflected radiation spots (e.g., **FIG. 9**) in two-dimensional space provide information about distance and tilt of the sample relative to objective plane. The invention also enables elimination of analog signals (readings from a CCD matrix detector are digital and are hence less influenced by electrical artifacts), which results in more robust data being extracted from a given sample. Finally, the claimed invention also provides simplified sample alignment, as sample alignment may be carried out manually or automatically by using information from the reflected radiation spots.

The auto focus system may suitably include standard, high resolution optical components, including a laser. The laser is suitably focused in the back focal plane of objective lens; and the reflected beam is collected by an aspheric lens to provide a sharp focus on the sensor surface detector (e.g., CCD). In some embodiments, the laser beam is spatially filtered to so as minimize variations in beam profile, as set forth in the attached figures.

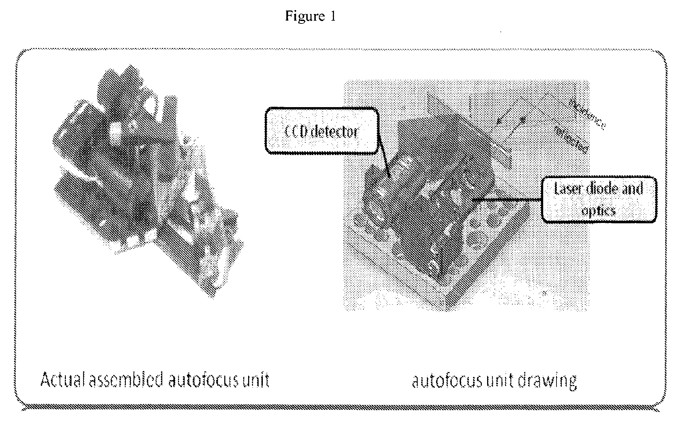

**FIG. 1** depicts an actual autofocus unit made according to the claimed invention. As shown, the unit includes a laser unit and optics, arranged such that the laser beam passes through the optics at an angle incident to the sample (beam labeled "incidence"), and is reflected (beam labeled "reflected") off of the sample to an optical detector, in this case a CCD. By using the coordinates of where the reflected beam strikes the CCD detector, the system translates those coordinates into a data set representing the location of the objective relative to the sample, and can adjust the relative position of the objective and sample accordingly.

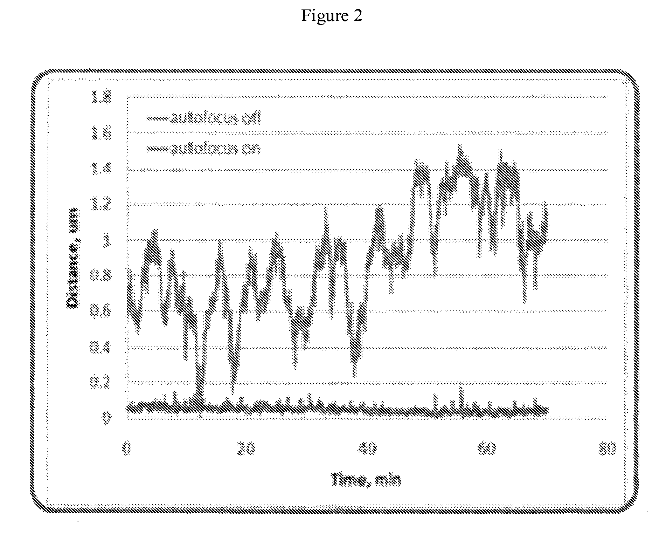

**FIG. 2** illustrates the ability of the claimed invention to prevent "drift" as a sample is monitored over time. As shown in the figure, a microscopy system displays "drift" over a period of time (60 minutes), when the autofocus system of the claimed invention is turned off. This "drift" may require an experimentalist to re-focus the non-autofocus system even if the system is left unattended for only a few minutes; as shown by **FIG. 2**, a system can experience comparatively large deviations from an initial focus setting if the system is left unattended. By contrast, **FIG. 2** also shows that the claimed invention, when active, can maintain stable focus on a subject over the same (60 minutes) period of time over which the non-active system displays "drift."

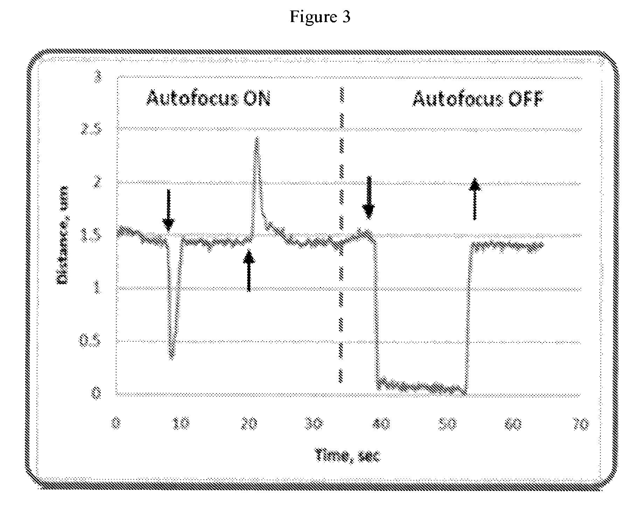

**FIG. 3** illustrates the claimed invention's ability to respond to external stimuli. As shown in the left-hand side of the figure, the claimed invention automatically restores the focus on a subject, in real time, when the system is subjected to applied force. By contrast, the right-hand side, illustrating the system's behavior with the autofocus turned off, demonstrates that the system without autofocus did not restore focus following external force application. This demonstrates the system's utility in environments where vibration or other external forces (e.g., passing traffic) pose a challenge to maintaining proper focus on a subject.

**FIG. 4** depicts one sample, non-limiting embodiment of the claimed invention. As shown in the figure, a sample is illuminated by both a light source and by a laser. The laser passes through the microscope objective and reflects back from the sample by way of the objective, the reflected laser beam being collected by a multi-object CCD sensor or other optical detector.

Mirrors, filters, and beam splitters may all be used (singly or in conjunction with one another) to control the path of the laser (and excitation) radiation, as needed. Preferably, one or more controllers correlates the location on the CCD or other detector where the laser light or other radiation strikes the device with the relative positions of the sample and the objective, and adjusts the position of the sample, objective, or both so as to maintain proper focus.

As shown in the figure, an excitation illuminator is used to illuminate the sample, shown at the upper right of the figure, with the illumination passing through and being reflected by dichroic mirrors. A laser and a radiation detector (CCD) are shown in the figure; as described elsewhere herein, the laser's beam impacts the sample and reflects off of the sample, the reflected beam then being detected by the CCD unit. The position of the "spots" on the CCD unit will vary with the sample position, and the user may adjust the position or orientation of the sample according to the information gathered by the CCD unit. This may be accomplished by an automated system, such as a controller, which in turn acts to adjust the sample position in real time.

As described elsewhere herein, the claimed invention may use two or more laser beams in the autofocus operation, as shown by non-limiting **FIG. 9****.** A first laser beam may provide, for example, information regarding the relative positions of the sample and the objective in the Z-axis only. A second laser beam, which may illuminate a different part of the sample than the first laser beam, may then provide additional information regarding the sample's tilt relative to the objective or information regarding the sample's XYZ-orientation relative to the objective. A controller then correlates information gathered from the optical detector's collection of each of the laser beams to the position and orientation of the sample relative to the objective, and then accordingly adjusts the sample stage, the objective, or both.

In **FIG. 9**, multiple beams are shown propagating off the optical axis of an objective and reflecting off of a sample, with the reflective beams striking a detector (shown at the bottom-right of **FIG. 9**).

The left-hand side of the figure illustrates effect of vertically shifting the sample plane relative to the detector (the new sample position is shown by the dotted line at the upper-left of **FIG. 9**). As shown in the left-hand region of **FIG. 9**, when the sample moves up (*i*.*e*., away from the detector), the spots on the detector shift from their original positions (shown by 1a and 2a, respectively) to new positions (shown by 1b and 2b, respectively) that are located closer to the detector's center.

The right side of **FIG. 9** illustrates the effect on the system of the sample plane being tilted. As shown in the figure, a sample plane is tilted from its initial orientation (shown by the horizontal, solid line at the upper-right of **FIG. 9**) to a new, tilted orientation (shown by the dotted line at the upper-right of **FIG. 9**). As depicted in the figure, the spots on the detector shift from their original positions (shown by 3a and 4a, respectively) to new, different positions (shown by 3b and 4b, respectively) on the detector, thus enabling the user to account for the reorientation of the sample.

As shown by **FIG. 9**, different movements of the sample (i.e., shifting versus tilting) result in different spot shifts. Thus, by tracking dual spots, the user can distinguish between (and account for) sample shift (i.e., translation along one or more axes) and tilt.

## Claims

1. A method of maintaining automated optical focus on a target sample, comprising:
specifying a programmed position and angular relationship between an optical plane within a magnifier and a target sample;
illuminating at least a portion of the target sample with at least one beam of radiation inclined at an incidence angle of at least about 5 degrees;
collecting, on a radiation detector, at least a portion of any radiation reflected from the target sample; wherein the illuminating and collecting steps are performed through the optical plane of the magnifier;
correlating the location of the reflected radiation collected on the radiation detector with the position and angular orientation of the target sample relative to the optical plane of the magnifier; and
varying the position and angular orientation of the optical plane of the magnifier, the target sample, or both, so as to maintain the programmed position and angular relationship between the optical plane of the magnifier and the target sample.

2. The method of claim 1, wherein the illuminating comprises exposing the target sample to a laser.

3. The method of claim 1, wherein the step of correlating the location of the reflected radiation collected on the radiation detector with the position and angular orientation of the sample relative to the optical plane of the magnifier comprises comparing (a) the location of the reflected radiation collected on the radiation detector with (b) the location on the radiation detector that radiation reflected from a sample is known to illuminate when the sample is in a particular position and angular orientation relative to the optical plane of the magnifier.

4. The method of claim 1, wherein varying the position and angular orientation of the optical plane of the magnifier, the target sample, or both, comprises elevating, lowering, tilting, rotating, or any combination thereof.

5. The method of claim 1, wherein the beam of radiation has a wavelength that does not interfere with visual inspection of the target sample.

6. The method of claim 1, further comprising illuminating at least a portion of the target sample with two or more beams of collimated radiation.

7. The method of claim 1, further comprising construction of a data set comprising the location on the radiation detector that radiation reflected from a target sample illuminated with at least one beam of radiation inclined at an incidence angle of at least about 5 degrees is known to illuminate when the target sample is in a particular position and angular orientation relative to the optical plane of the magnifier, for two or more spatial orientations of the target sample.

8. The method of claim 7, wherein the step of correlating comprises comparing the location of the reflected radiation collected on the radiation detector with the data set.

9. An autofocus device, comprising:
a magnifier;
a sample stage,
at least one of the magnifier and the sample stage being capable of tilting, rotating, rising, lowering, or any combination thereof;
a radiation source capable of illuminating a sample disposed on the sample stage through the optical plane of the magnifier with a beam of radiation at an incidence angle of at least about 5 degrees;
a radiation detector in optical communication with the sample disposed on the sample stage, the radiation detector being capable of collecting at least a portion of any radiation reflected from the sample disposed on the sample stage through the optical plane of the magnifier; and
a device capable of correlating the location on the radiation detector of any radiation reflected from the sample disposed on the sample stage with the position and angular orientation of the sample relative to the magnifier.

10. The autofocus device of claim 9, wherein the radiation detector comprises a charge-coupled device.

11. The autofocus device of claim 9, wherein the magnifier comprises a microscope.

12. The autofocus device of claim 9, wherein the radiation source comprises a laser.

13. The autofocus device of claim 9, further comprising a controller that governs the position and orientation of the magnifier or a controller that governs the position and angular orientation of the sample stage.

14. The autofocus device of claim 9, further comprising a splitter capable of dividing the beam of radiation into multiple beams of radiation.

15. The method of claim 1, wherein the programmed position and angular relationship between the optical plane of the magnifier and the target sample is maintained in the presence of environmental vibrations or other external forces.

## Patentansprüche

1. Verfahren zum Aufrechterhalten eines automatisierten optischen Fokus auf eine Zielprobe, umfassend:
Spezifizieren einer programmierten Positions- und Winkelbeziehung zwischen einer optischen Ebene innerhalb einer Vergrößerungseinrichtung und einer Zielprobe;
Beleuchten mindestens eines Abschnitts der Zielprobe mit mindestens einem Strahlungsstrahl, der in einem Einfallswinkel von mindestens etwa 5 Grad geneigt ist;
Sammeln mindestens eines Abschnitts einer etwaigen, von der Zielprobe reflektierten Strahlung auf einem Strahlungsdetektor; wobei der Beleuchtungs- und Sammelschritt durch die optische Ebene der Vergrößerungseinrichtung durchgeführt werden;
Korrelieren des Orts der auf dem Strahlungsdetektor gesammelten reflektierten Strahlung mit der Positions- und Winkelorientierung der Zielprobe relativ zur optischen Ebene der Vergrößerungseinrichtung; und
Variieren der Positions- und Winkelorientierung der optischen Ebene der Vergrößerungseinrichtung, der Zielprobe oder beider, um die programmierte Positions- und Winkelbeziehung zwischen der optischen Ebene der Vergrößerungseinrichtung und der Zielprobe aufrechtzuerhalten.

2. Verfahren nach Anspruch 1, wobei das Beleuchten umfasst, die Zielprobe einem Laser auszusetzen.

3. Verfahren nach Anspruch 1, wobei der Schritt des Korrelierens des Orts der auf dem Strahlungsdetektor gesammelten reflektierten Strahlung mit der Positions- und Winkelorientierung der Probe relativ zur optischen Ebene der Vergrößerungseinrichtung das Vergleichen (a) des Orts der auf dem Strahlungsdetektor gesammelten reflektierten Strahlung mit (b) dem Ort auf dem Strahlungsdetektor umfasst, den die von einer Probe reflektierte Strahlung bekannterweise beleuchtet, wenn sich die Probe in einer bestimmten Positions- und Winkelorientierung relativ zur optischen Ebene der Vergrößerungseinrichtung befindet.

4. Verfahren nach Anspruch 1, wobei das Variieren der Positions- und Winkelorientierung der optischen Ebene der Vergrößerungseinrichtung, der Zielprobe oder beider Anheben, Absenken, Kippen, Drehen oder eine beliebige Kombination davon umfasst.

5. Verfahren nach Anspruch 1, wobei der Strahlungsstrahl eine Wellenlänge besitzt, die die visuelle Untersuchung der Zielprobe nicht stört.

6. Verfahren nach Anspruch 1, weiterhin umfassend das Beleuchten mindestens eines Abschnitts der Zielprobe mit zwei oder mehr Strahlen kollimierter Strahlung.

7. Verfahren nach Anspruch 1, weiterhin umfassend die Konstruktion eines Datensatzes, umfassend den Ort auf dem Strahlungsdetektor, den Strahlung, die von einer Zielprobe reflektiert wird, die mit mindestens einem Strahlungsstrahl beleuchtet wird, der in einem Einfallswinkel von mindestens etwa 5 Grad geneigt ist, bekannterweise beleuchtet, wenn sich die Zielprobe in einer bestimmten Positions- und Winkelorientierung relativ zur optischen Ebene der Vergrößerungseinrichtung befindet, für zwei oder mehr räumliche Orientierungen der Zielprobe.

8. Verfahren nach Anspruch 7, wobei der Schritt des Korrelierens das Vergleichen des Orts der auf dem Strahlungsdetektor gesammelten reflektierten Strahlung mit dem Datensatz umfasst.

9. Autofokuseinrichtung, die Folgendes umfasst:
eine Vergrößerungseinrichtung;
einen Probentisch,
wobei die Vergrößerungseinrichtung und/oder der Probentisch zum Kippen, Drehen, Anheben, Absenken oder einer beliebigen Kombination davon in der Lage sind;
eine Strahlungsquelle, die eine auf dem Probentisch angeordnete Probe durch die optische Ebene der Vergrößerungseinrichtung mit einem Strahlungsstrahl in einem Einfallswinkel von mindestens etwa 5 Grad beleuchten kann;
einen Strahlungsdetektor in optischer Kommunikation mit der auf dem Probentisch angeordneten Probe, wobei der Strahlungsdetektor mindestens einen Teil einer etwaigen Strahlung sammeln kann, die von der auf dem Probentisch angeordneten Probe durch die optische Ebene der Vergrößerungseinrichtung reflektiert wird; und
eine Einrichtung, die den Ort auf dem Strahlungsdetektor etwaiger Strahlung, die von der auf dem Probentisch angeordneten Probe reflektiert wird, mit der Positions- und Winkelorientierung der Probe relativ zur Vergrößerungseinrichtung korrelieren kann.

10. Autofokuseinrichtung nach Anspruch 9, wobei der Strahlungsdetektor eine ladungsgekoppelte Einrichtung umfasst.

11. Autofokuseinrichtung nach Anspruch 9, wobei die Vergrößerungseinrichtung ein Mikroskop umfasst.

12. Autofokuseinrichtung nach Anspruch 9, wobei die Strahlungsquelle einen Laser umfasst.

13. Autofokuseinrichtung nach Anspruch 9, weiterhin umfassend einen Controller, der die Position und Orientierung der Vergrößerungseinrichtung steuert, oder einen Controller, der die Positions- und Winkelorientierung des Probentischs steuert.

14. Autofokuseinrichtung nach Anspruch 9, weiterhin umfassend einen Teiler, der den Strahlungsstrahl in mehrere Strahlungsstrahlen aufteilen kann.

15. Verfahren nach Anspruch 1, wobei die programmierte Positions- und Winkelbeziehung zwischen der optischen Ebene der Vergrößerungsvorrichtung und der Zielprobe in Anwesenheit von Umgebungsschwingungen oder anderen externen Kräften aufrechterhalten wird.

## Revendications

1. Procédé de maintien d'une mise au point optique automatisée sur un échantillon cible, comprenant :
la spécification d'une relation de position et angulaire programmée entre un plan optique à l'intérieur d'une loupe et un échantillon cible ;
l'éclairage d'au moins une partie de l'échantillon cible avec au moins un faisceau de rayonnement incliné à un angle d'incidence d'au moins environ 5 degrés ;
la collecte, sur un détecteur de rayonnement, d'au moins une partie de tout rayonnement réfléchi à partir de l'échantillon cible ; les étapes d'éclairage et de collecte étant effectuées à travers le plan optique de la loupe ;
la corrélation de l'emplacement du rayonnement réfléchi collecté sur le détecteur de rayonnement avec la position et l'orientation angulaire de l'échantillon cible par rapport au plan optique de la loupe ; et
la variation de la position et de l'orientation angulaire du plan optique de la loupe, de l'échantillon cible, ou des deux, de manière à maintenir la relation de position et angulaire programmée entre le plan optique de la loupe et l'échantillon cible.

2. Procédé selon la revendication 1, dans lequel l'éclairage comprend l'exposition de l'échantillon cible à un laser.

3. Procédé selon la revendication 1, dans lequel l'étape de corrélation de l'emplacement du rayonnement réfléchi collecté sur le détecteur de rayonnement avec la position et l'orientation angulaire de l'échantillon par rapport au plan optique de la loupe comprend la comparaison de (a) l'emplacement du rayonnement réfléchi collecté sur le détecteur de rayonnement avec (b) l'emplacement sur le détecteur de rayonnement dont on sait qu'un rayonnement réfléchi à partir d'un échantillon éclaire quand l'échantillon est dans une position et une orientation angulaire particulières par rapport au plan optique de la loupe.

4. Procédé selon la revendication 1, dans lequel la variation de la position et de l'orientation angulaire du plan optique de la loupe, de l'échantillon cible, ou des deux, comprend une élévation, un abaissement, une inclinaison, une rotation, ou toute combinaison de ceux-ci.

5. Procédé selon la revendication 1, dans lequel le faisceau de rayonnement a une longueur d'onde qui n'interfère pas avec une inspection visuelle de l'échantillon cible.

6. Procédé selon la revendication 1, comprenant en outre l'éclairage d'au moins une partie de l'échantillon cible avec au moins deux faisceaux de rayonnement collimaté.

7. Procédé selon la revendication 1, comprenant en outre la construction d'un ensemble de données comprenant l'emplacement sur le détecteur de rayonnement dont on sait qu'un rayonnement réfléchi à partir d'un échantillon cible éclairé avec au moins un faisceau de rayonnement incliné à un angle d'incidence d'au moins environ 5 degrés éclaire quand l'échantillon cible est dans une position et une orientation angulaire particulières par rapport au plan optique de la loupe, pour au moins deux orientations spatiales de l'échantillon cible.

8. Procédé selon la revendication 7, dans lequel l'étape de corrélation comprend la comparaison de l'emplacement du rayonnement réfléchi collecté sur le détecteur de rayonnement avec l'ensemble de données.

9. Dispositif de mise au point automatique, comprenant :
une loupe ;
une platine porte-échantillon,
la loupe et/ou la platine porte-échantillon étant capables de s'incliner, tourner, monter, descendre, ou toute combinaison de ceux-ci ;
une source de rayonnement capable d'éclairer un échantillon disposé sur la platine porte-échantillon à travers le plan optique de la loupe avec un faisceau de rayonnement à un angle d'incidence d'au moins environ 5 degrés ;
un détecteur de rayonnement en communication optique avec l'échantillon disposé sur la platine porte-échantillon, le détecteur de rayonnement étant capable de collecter au moins une partie de tout rayonnement réfléchi à partir de l'échantillon disposé sur la platine porte-échantillon à travers le plan optique de la loupe ; et
un dispositif capable de corréler l'emplacement sur le détecteur de rayonnement de tout rayonnement réfléchi à partir de l'échantillon disposé sur la platine porte-échantillon avec la position et l'orientation angulaire de l'échantillon par rapport à la loupe.

10. Dispositif de mise au point automatique selon la revendication 9, dans lequel le détecteur de rayonnement comprend un dispositif à couplage de charge.

11. Dispositif de mise au point automatique selon la revendication 9, dans lequel la loupe comprend un microscope.

12. Dispositif de mise au point automatique selon la revendication 9, dans lequel la source de rayonnement comprend un laser.

13. Dispositif de mise au point automatique selon la revendication 9, comprenant en outre un contrôleur qui gouverne la position et l'orientation de la loupe ou un contrôleur qui gouverne la position et l'orientation angulaire de la platine porte-échantillon.

14. Dispositif de mise au point automatique selon la revendication 9, comprenant en outre un séparateur capable de diviser le faisceau de rayonnement en de multiples faisceaux de rayonnement.

15. Procédé selon la revendication 1, dans lequel la relation de position et angulaire programmée entre le plan optique de la loupe et l'échantillon cible est maintenue en présence de vibrations environnementales ou d'autres forces externes.
